# EUROPEAN PATENT SPECIFICATION

(11) **EP 0 948 916 B1**
(45) Date of publication and mention of the grant of the patent: **30.06.2004**
(21) Application number: 98830211.3
(22) Date of filing: 07.04.1998
(51) Int. Cl.: A47B 1/00, H02B 1/30, H02B 1/01

(54) **Support structure for a modular cabinet for electric and/or electronic apparatuses**
Trägerstruktur für einen modularen Schrank für elektrische oder elektronische Geräte
Structure de support pour une armoire modulaire d'appareils électriques ou électroniques

(43) Date of publication of application: 13.10.1999
(73) Proprietor: E.T.A. S.p.A., 22035 Canzo (Como) (IT)
(72) Inventor: Turati, Aldo, 22030 Caslino D'Erba, Como (IT)
(74) Representative: Tansini, Elio Fabrizio

(56) References cited:
- EP-A- 0 183 395
- EP-A- 0 389 910
- WO-A-94/19850
- DE-A- 4 132 803
- DE-A- 4 227 532
- DE-A- 4 333 031
- DE-A- 4 439 624
- DE-C- 4 439 551
- DE-C- 19 536 904
- DE-U- 8 511 217
- DE-U- 29 623 065
- FR-A- 2 674 581
- FR-A- 2 681 403
- FR-A- 2 697 300
- FR-A- 2 708 391
- US-A- 2 058 263

## Description

The present invention relates to a support structure for a modular cabinet for electric and/or electronic apparatuses comprising metal section members defining upright elements and crosspiece elements, and connecting means between the metal section members.

It is known that cabinets or containers for electric apparatuses of various nature may consist of section members and metal slabs or plates suitably connected with each other by weldings, screws or other connecting means.

If transportation and storage expenses are required to be limited, the support structure or skeleton formed of the metal section members and the related connecting means, panels and closing doors are advantageously mounted and directly assembled in the utilization place so as to obtain modular cabinets better complying with the intended uses.

It is to point out that an essential requirement in these types of cabinets is that of ensuring closed spaces sufficiently insulated from water and dust. Suitable seals between the different cabinet components enabling an appropriate tightening action are usually provided for the purpose. In the known art section members of complicated shape are generally used which are obtained by assembling bent metal sheets forming projecting tabs, edges and portions for anchoring of door hinges and closing panels and for abutment of seals. The above mentioned section members are generally of different conformations depending on whether they are used to form uprights or crosspiece elements of the cabinet base or the cabinet roof.

Therefore in the known art for each cabinet all the different types of section members are required to be kept in stock, which will bring about a clear increase in the manufacturing costs and a greater complexity in the warehouse management and piece assembling.

In addition, in cabinets of known type often problems arise as regards seals between the section members and the panels constituting the walls or closing doors for example, because fastening regions on the section members are not provided for these seals, said fastening regions only existing on the panels and doors; as a result, said seals are required to be placed in a very precise manner on panels and doors so that they may exactly abut against the section member regions intended for the purpose.

Complications as regards shape also exist for seals between the connecting means joining the section members at the cabinet vertices, in order to be able to follow the abutment surfaces which usually are not of flat form.

Furthermore, in the known art difficulties may arise in assembling the panels constituting the side walls when said panels are held manually in place until they are sufficiently fastened to the section members.

Finally, in order to enable appropriate lifting eyebolts to be engaged with the modular cabinets of known type, specific elements for engagement of said eyebolts are required to be added to the connecting means between the section members.

Are also known from documents DE 44 39 551 A and DE 41 32 803 A tubolar metal section members for support structure having in cross section a profile substantially L-shaped or C-shaped. These documents furter shown a recessed portion of the members adapted to be turned outwardly.
Moreover are also known from documents FR 2 681 403A, US 2 058 263 and FR 2 697 300A support structure comprising metals section member defining crosspiece elements and upright elements connected with joining means disposed for each cabinet vertex at wich three of the section members converge. The section members are of the laminar tipe and present a surface adapted to be in contact with a attaching surface of the joining members.
It is also known from document DE 296 23 065A a support structure having metal section elements that define crosspiece element which present in cross section a closed profile defining an L-shaped inner cavity. The structure further comprises metal section elements that define upright element having two external tubolar portion and a central laminar portion.
Finally it is known from document FR 2 674 581A a device for assembling cabinet in which the metal section members defining upright elements and crosspiece elements and present in cross-section a contour comprising a "sort" of recessed portion turned outwardly of the closed volume defined by the cabinet. The metal section elements present two wings adapted to form a substantially L-shaped conformation in which said rectilinear lengths (13) transverse to each other define the end thicknesses of the "L".

Under this situation, the technical task underlying the present invention is to devise a support structure for a modular cabinet capable of substantially obviating the above mentioned drawbacks. Within the scope of this technical task it is an important aim of the invention to devise a support structure for modular cabinet the metal section members of which are of a single conformation in cross-section for all upright and crosspiece elements both at the cabinet base and the cabinet roof, thereby simplifying the section-member construction and assembling steps.

Another important aim of the invention is to devise a support structure for a modular cabinet in which the conformation of the metal section members and the related connecting means at the vertices facilitates application of seals and simplify the shape that said seals must have.

A still further object is to devise a strong and stiff support structure adapted to be easily mounted and enabling the cabinet formed therewith to be made immediately liftable.

The technical task mentioned and the aims specified are substantially achieved by a support structure for a modular cabinet which is characterized in that said metal section members are of a tubular type and, seen in cross-section, have a contour comprising a recessed portion intended to be turned outwardly of the closed volume defined by the cabinet itself and two substantially rectilinear lengths delimiting said recessed portion and oriented transversely of each other.

Further features and advantages of the invention will become more apparent from the description of some preferred non-exclusive embodiments of a support structure for a modular cabinet in accordance with the invention, given by way of non-limiting example in the accompanying drawings, in which:

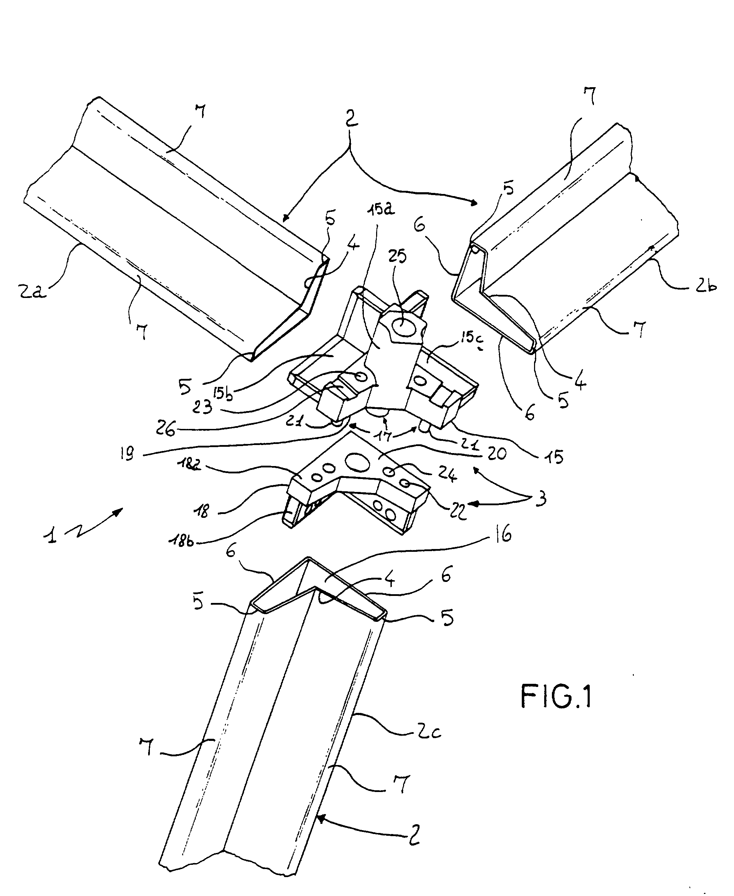

- Fig. 1 is an exploded perspective view of the end portions of three section members converging at a vertex and the related connecting means adapted to form a support structure in accordance with the invention;
- Fig. 2 is a cross-sectional view of an upright element with which a door and a side wall are associated;
- Fig. 3 is a cross-sectional view of a first embodiment of section members corresponding to the one already shown in Fig. 1;
- Fig. 4 is a cross-sectional view of the second embodiment of section members as shown in Fig. 1;
- Fig. 5 shows a third embodiment of the cross-section of section members as seen in Fig. 1; and
- Fig. 6 is a fourth embodiment of the cross-section of section members as seen in Fig. 1.

With reference to the drawings, the support structure for a modular cabinet in accordance with the invention has been generally identified by reference numeral 1.

It comprises metal section members 2 adapted to define both crosspiece elements 2a, 2b, i.e. elements oriented horizontally when installed, and upright elements 2c, i.e. elements disposed in a vertical orientation when installed, and connecting means 3 for said metal section members.

In an original manner, said section members are of a tubular type, i.e. of closed section, and have a cross-section of one and the same shaped profile, the contour of which comprises a recessed portion 4 intended to be turned outwardly of the closed volume defined by the cabinet. The recessed portion 4 of the contour is delimited by two substantially rectilinear lengths 5 which are oriented perpendicularly of each other. Practically, the cross-section of section members 2 having the above mentioned features can advantageously consist of a pair of wings 6 disposed at right angles so as to form a substantially L-shaped conformation or "angle iron", in which the rectilinear lengths 5 define the end thicknesses of said "L".

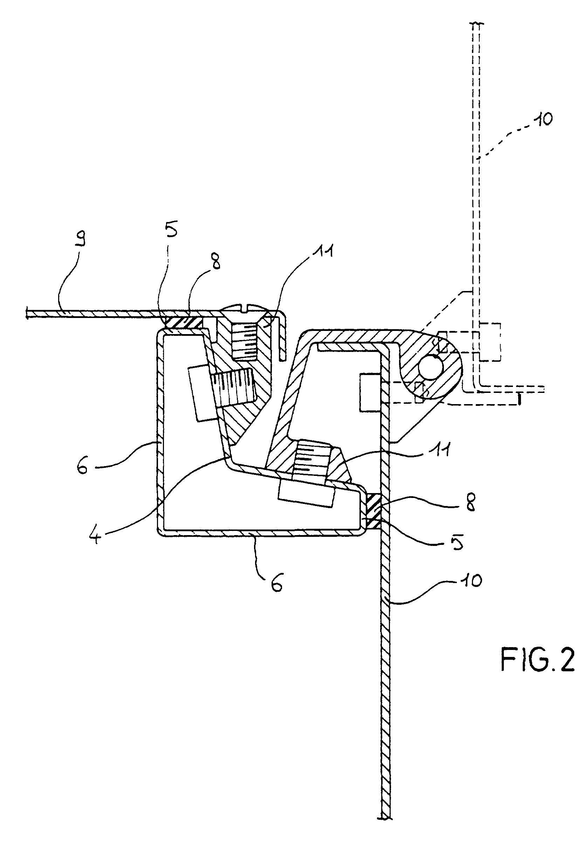

Said rectilinear lengths 5 correspond to flat end faces 7 of the section member 2 with which seals 8 can be conveniently and easily engaged, which seals are intended for being interposed between the section member itself and a panel or slab 9 forming a cabinet wall or a cabinet door 10 in a closed position. The recessed portion 4 of the contour included between wings 6 will form a sunken region of the section member in which hooking elements 11 of a panel 9 or a door 10 can usefully be disposed (see Fig. 2).

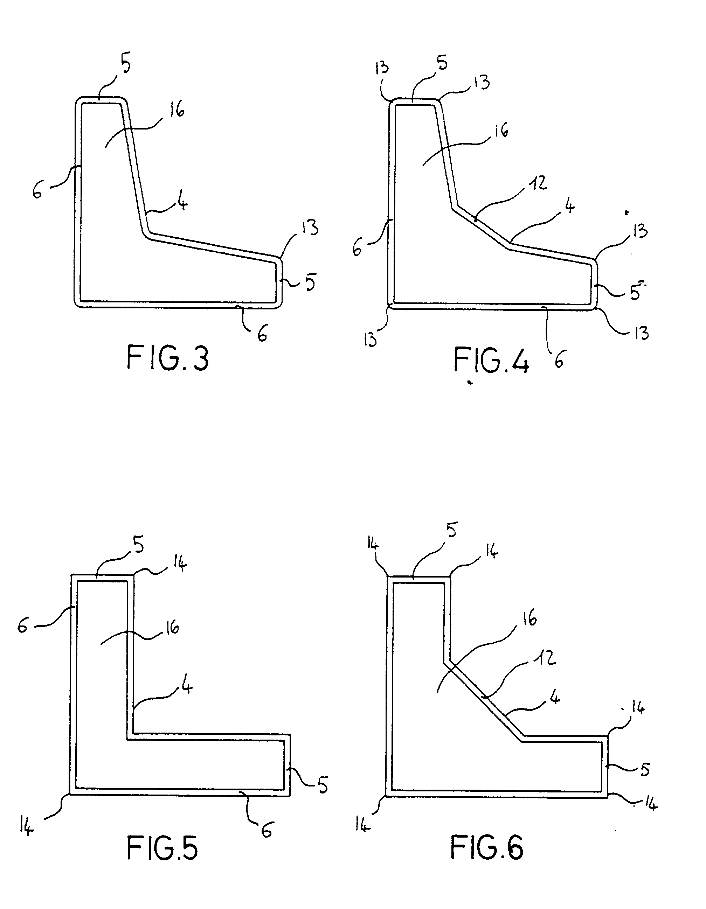

Wings 6 defining the L shape of the cross-section can have different conformations. For instance, they may have a tapering conformation, i.e. a conformation getting narrower in width towards the rectilinear end lengths 5 (see Fig. 3). The tapering wings may also be connected with each other at the recessed portion 4 of the contour by a segment 12 substantially inclined at 45° relative to the end lengths 5 and defining a flat face to which the hooking elements 11 can be applied (see Fig. 4). Alternatively, wings 6 may have a constant width close to the end lengths 5 and may be connected with each other or not by a segment 12 inclined at 45° relative to said end lengths 5 (see Figs. 5 and 6).

In addition, wings 6 have either corners of round conformation 13 for connection with each other and at the rectilinear end lengths 5, the radius of curvature of which is to be established depending on requirements (see Figs. 3 and 4), or sharp edges 14 (see Figs. 5 and 6).

It is pointed out that in each case, independently of the selected one of the above described embodiments and the cross-section of the section members, said section members can be of a single type for all applications and functions for which they are intended.

The connecting means 3 for each cabinet vertex, at which three sections members converge, i.e. two first section members 2a and 2b defining two crosspiece elements for example and a third section member 2c forming an upright element, comprises a first junction element 15, in turn comprising a first base body 15a, a first attachment projection 15b and a second attachment projection 15c. Said attachment projections are transverse to each other and the shape of each ot them matches that of the inner cavity 16 of the section members 2 into which it is inserted and to which it is suitably fastened, by welding for example.

Practically, the first junction element 15 is adapted to rigidly connect the ends of the two first section members 2a and 2b in order to cause them to be disposed perpendicularly of each other.

The first junction element 15 can be coupled by removable joining members 17 partly shown in the accompanying drawings, to a second junction element 18.

The last mentioned junction element 18 comprises a second base body 18a and a third attachment projection 18b substantially identical with the attachment projections 15b and 15c so that its shape too matches that of the inner cavity 16 of section members 2. The third attachment projection 12b is fitted in and fastened to the third section member 2c constituting the upright element.

The first base body 15a and second base body 18a have respective abutment faces of flat conformation, i.e. a first face 19 and a second face 20 intended for getting fixed against each other by means of the joining members 17, so that the third section member 2c in an operating condition is disposed perpendicular to the two first section members 2a and 2b.

The joining members 17 comprise dowels 21 emerging from the first base body 15a and adapted to be fitted into gauged holes 22 in the second base body 18a, and tightening screws (not shown) to be fitted into through holes 23 from the first base body 15a and into threaded holes 24 formed in the second base body 18a.

Advantageously dowel 21 and the gauged holes 22 have respective lengths and depths adapted to maintain a limited clearance of predetermined amount between the abutment faces 19 and 20, so that the seal interposed between said faces is not submitted to an excessive compression that could impair integrity during tightening of the above mentioned screws.

Seen in plan view, the first base body 15a has a substantially right-angled conformation, i.e. formed of two perpendicular wings from which the first projection 15b and the second projection 15c extend.

Preferably the through holes 23 are located in said wings so as to centrally leave an appropriate space for a threaded seat 25 disposed vertically in an operating position and adapted to engage a lifting eyebolt.

Finally, the first base body 15a at the upper part thereof has sunken seats 26 adapted to support bent edge portions of the panels or slabs 9 arranged to define cabinet walls oriented parallelly of the crosspiece elements 2a and 2b and the upright element 2c. Practically, the sunken seats 26 enable the assembling operations of the modular cabinet to be simplified because by means of them the slabs forming the walls can be hooked to the support structure and held in place without any manual intervention before carrying out the final fastening operation by means of screws or other connecting means.

The invention achieves important advantages.

In fact, the particular symmetric conformation of the section-member section devoid of uneven and projecting portions enables use of a single type of section members both as crosspiece elements of the cabinet base and the cabinet roof and as upright elements, which will make it useless to keep in stock or supply section members of different shapes.

In addition, the flat end faces delimiting each section member constitute surfaces that are particularly appropriate for application of seals that in this way are surely in abutment against the walls and doors without requiring any operation for selecting and verifying placement of same, which, on the contrary, does not occur if said seals are directly applied to the cabinet walls and doors.

It is finally to point out that due to the tubular L-shaped conformation of the section members, they have high stiffness features and offer the possibility of inserting junction elements thereinto, the shape of which matches that of cavities 16 and which are also very strong and solid.

## Claims

1. A support structure for a modular cabinet for electric and/or electronic apparatuses, comprising:
- metal section members (2) defining upright elements (2c) and crosspiece elements (2a, 2b) and presenting in cross-section a contour comprising a recessed portion (4) adapted to be turned outwardly of the closed volume defined by the cabinet itself and two substantially rectilinear lengths (5) delimiting said recessed portion (4) and oriented transversely of each other,
- connecting means (3) between the metal section members, for each cabinet vertex at which three of said section members (2) converge, is comprised of: a first junction element (15) comprising a first base body (15a) and a first and a second attachment projections (15b, 15c) transverse to each other, said first junction element (15) being adapted to rigidly connect the ends of two first section members (2) in such a manner that they are preferably disposed perpendicularly to each other in an operating position; a second junction element (18) comprising a second base body (18a) and a third attachment projection (18b) adapted for rigid engagement with an end of a third section member (2c), said first base body (15a) having a first abutment face (19) abutting against a second abutment face (20) of said second base body (18a) in such a manner that said third section member (2c) is disposed preferably perpendicularly of said two first section members (2a, 2b) in an operating position; and removable joining members (17) between said first junction element (15) and said second junction element (18);
**characterized in that** the metal section elements (2) are of the tubular type and present in cross-section a closed profile defining an L-shaped inner cavity (16),and **in that** said first, second and third attachment projections (15b, 15c, 18b) present a cross-shape that matches the shape of the L-shaped inner cavity (16) of said metal section members (2), said first, second and third attachment projections (15b, 15c, 18b) being adapted in operating condition to be inserted in the respective L-shaped inner cavity (16).

2. A structure as claimed in claim 1, **characterized in that** said substantially L-shaped wings (6) have said rectilinear end lengths (5) of a tapering conformation.

3. A structure as claimed in claim 2, **characterized in that** said wings of tapering conformation are connected with each other at said recessed portion of the contour by a segment (12) preferably inclined at 45° relative to the rectilinear end lengths (5).

4. A structure as claimed in claim 1, **characterized in that** said wings (6) forming said angle iron have corners of round conformation (13) at the end.

5. A structure as claimed in claim 1, **characterized in that** said wings (6) forming said angle iron have a constant width towards said rectilinear end lengths (5) and are connected with each other at said recessed portion (4) of the contour by a segment (12) preferably inclined at 45° relative to said rectilinear end lengths (5).

6. A structure as claimed in claim 5, **characterized in that** said wings forming said angle iron have sharp edges (14) at the end.

7. A structure as claimed in claim 1, **characterized in that** said first junction element is intended for connection between section members defining crosspiece elements (2a, 2b) and said first base body (15a) centrally has a threaded seat (25) disposed vertically in an operating condition and adapted to engage a lifting eyebolt.

8. A structure as claimed in claim 1, **characterized in that** said first junction element (15) is intended for connection between section members defining crosspiece elements (2a, 2b) and said first base body (15a) has sunken seats (26) adapted to support bent edge portions of panels (9) arranged to define cabinet walls parallel to said section members (2).

9. A structure as claimed in claim 1, **characterized in that** said joining members (17) between said first junction element (15) and said second junction element (18) comprise:
- dowels (21) emerging from one of said abutment faces (19, 20) and insertable in gauged holes (22) of the other abutment face, and
- tightening screws adapted to connect said first (15a) and second (18a) base bodies in abutment against each other at said abutment faces (19, 20).

10. A structure as claimed in claim 9, **characterized in that** said gauged holes (22) and dowels (21) have respective depths and lengths adapted to keep a predetermined clearance between said abutment faces (19, 20).

11. A structure as claimed in claim 1, **characterized in that** said rectilinear end lengths (5) define flat end faces in the section member (2) for engagement of seals.

## Patentansprüche

1. Trägerstruktur für einen modularen Schrank für elektrische oder elektronische Geräte, umfassend:
- Metallprofile (2), die Stützelemente (2c) und Querelemente (2a, 2b) festlegen und im Querschnitt eine Kontur aufweisen, die einen rückspringenden Teil (4), der dazu bestimmt ist, nach außen des durch den Schrank selber festgelegten, geschlossenen Volumens gerichtet zu werden, und zwei im wesentlichen gerade Abschnitte (5) aufweist, die den rückspringenden Teil (4) begrenzen und zueinander quer ausgerichtet sind;
- Verbindungsmittel (3) zwischen den Metallprofilen, die für jede Ecke des Schrankes, in der drei der genannten Metallprofile (2) zusammenlaufen, umfassend : ein erstes Anschlu'sselement (15), umfassend einen ersten Basiskörper (15a) und einen ersten und zweiten, zueinander querliegenden Befestigungsansatz (15b, 15c), wobei das erste Anschlusselement (15) starr mit den Enden der beiden ersten Metallprofile (2) derart verbunden wird, dass dieselben bevorzugter Weise in Arbeitsstellung zueinander senkrecht stehen; ein zweites Anschlusselement (18), umfassend einen Basiskörper (18a) und einen dritten Verbindungsansatz (18b), die starr an einem Ende eines dritten Metallprofils (2c) in Eingriff kommen können, wobei der erste Basiskörper (15a) eine erste Anschlagfläche (19) aufweist, die gegen eine zweite Anschlagfläche (20) des zweiten Basiskörpers (18a) derart anstößt, dass das dritte Metallprofil (2c) in Arbeitsstellung bevorzugter Weise senkrecht zu den beiden ersten Metallprofilen (2a, 2b) angeordnet ist; und abnehmbare Verbindungsorgane (17) zwischen dem ersten Anschlusselement (15) und dem zweiten Anschlusselement (18);
**dadurch gekennzeichnet, dass** die Metallprofile (2) rohrartig sind und im Querschnitt eine geschossene Kontur aufweisen, die einen "L"-förmig profilierten Innenhohlraum festlegt, und dadurch, dass der erste, zweite und dritte Befestigungsansatz (15b, 15c, 18b) eine gegen zur Form des "L"förmigen Innenhohlraums der Metallprofile (2) gegenprofilierte Querform aufweisen, wobei der erste, der zweite und der dritte Befestigungsansatz (15b, 15c, 18) in Arbeitsstellung in den entsprechenden, "L"förmigen Innenhohlraum (16) eingebracht werden.

2. Struktur nach Anspruch 1, **dadurch gekennzeichnet, dass** die im wesentlichen die "L"förmige Kontur festlegenden Schenkel eine verjüngte Ausbildung der geraden Endabschnitte (5) aufweisen.

3. Struktur nach Anspruch 2, **dadurch gekennzeichnet, dass** die verjüngt ausgebildeten Schenkel untereinander im Bereich des rückspringenden Teils der Kontur über ein bevorzugt um 45° gegenüber den geraden Endabschnitten (5) geneigtes Segment (12) übergehen.

4. Struktur nach Anspruch 1, **dadurch gekennzeichnet, dass** die die "L"-förmige Kontur bildenden Schenkel (6) endseitig rund ausgebildete Kanten (13) aufweisen.

5. Struktur nach Anspruch 1, **dadurch gekennzeichnet, dass** die die "L"-förmige Kontur festlegenden Schenkel (6) eine in Richtung der geraden Endabschnitte (5) konstante Breite aufweisen und im Bereich des rückspringenden Teils (4) der Kontur über ein bevorzugter Weise gegenüber den geraden Endabschnitten (5) um 45° geneigtes Segment (12) übergehen.

6. Struktur nach Anspruch 5, **dadurch gekennzeichnet, dass** die die "L"-förmige Kontur bildenden Schenkel endseitig scharfe Kanten (14) aufweisen.

7. Struktur nach Anspruch 1, **dadurch gekennzeichnet, dass** das erste Anschlusselement für die Verbindung zwischen den die Querelemente (2a, 2b) festlegenden Profile bestimmt sind, und der erste Basiskörper (15a) mittig einen Schraubsitz (25) aufweist, der in Arbeitsstellung senkrecht angeordnet ist und mit einem Hebering in Eingriff kommt.

8. Struktur nach Anspruch 1, **dadurch gekennzeichnet, dass** das erste Anschlusselement (15) für die Verbindung den die Querelemente (2a, 2b) festlegenden Profile bestimmt ist und der erste Basiskörper (15a) Aussparungen (26) aufweist, der die umgebogenen Randteile von Tafeln (9) abstützen, die zur Festlegung zu den Metallprofilen (2) parallelen Wänden des Schrankes bereitgestellt sind.

9. Struktur nach Anspruch 1, **dadurch gekennzeichnet, dass** die Verbindungsorgane (17) zwischen dem ersten Anschlusselement (15) und dem zweiten Anschlusselement (18) umfassen:
- Zentrierbolzen (21), die von einer der A.nschlagseiten (19, 20) vorstehen und in kalibrierte Bohrungen (22) der anderen Anschlagseite einsteckbar sind, und
- Spannschrauben zur Verbindung des ersten (15a) und des zweiten (18a) Basiskörpers, die im Bereich der Anschlagseiten (19, 20) anstoßen.

10. Struktur nach Anspruch 9, **dadurch gekennzeichnet, dass** die kalibrierten Bohrungen (22) und Zentrierbolzen (21) jeweils Tiefen und Längen aufweisen, die eine vorgegebene lichte Weite zwischen den Anschlagflächen (19, 20) aufrecht erhalten.

11. Struktur nach Anspruch 1, **dadurch gekennzeichnet, dass** die geraden Endabschnitte (5) im Metallprofil flache Endseiten für den Eingriff von Dichtungen festlegen.

## Revendications

1. Structure de support pour une armoire modulaire d'appareils électriques et/ou électroniques, comprenant:
- des profilés métalliques (2) définissant des éléments montants (2c) et des éléments formant traverses (a, 2b) et présentant en coupe transversale un contour comprenant une portion en retrait (4) destinée à être tournée vers l'extérieur du volume fermé défini par l'armoire elle-même et deux tronçons sensiblement rectilignes (5) délimitant ladite portion en retrait (4) et orientés en sens transversal l'un par rapport à l'autre;
- des moyens de liaison (3) entre les profilés métalliques lesquels, pour chaque sommet de l'armoire auquel convergent trois desdits profilés (2), comportent: un premier élément de jonction (15) comprenant un premier corps de base (15a) et une première et une deuxième saillies de fixation (15b, 15c) transversales entre elles, ledit élément de jonction (15) étant destiné à relier rigidement les extrémités de deux premiers profilés (2) de telle sorte qu'ils sont de préférence disposés perpendiculaires l'un à l'autre en position opérante; un deuxième élément de jonction (18) comprenant un deuxième corps de base (18a) et une troisième saillie de fixation (18b) destinés à s'engager rigidement à une extrémité d'un troisième profilé (2c), ledit premier corps de base (15a) ayant une première face de butée (19) venant buter contre une deuxième face de butée (20) dudit deuxième corps de base (18a) de telle sorte que ledit troisième profilé (2c) est disposé de préférence perpendiculaire auxdits deux premiers profilés (2a, 2b) en position opérante; et des organes amovibles d'union (17) entre ledit premier élément de jonction (15) et ledit deuxième élément de jonction (18);
**caractérisée en ce que** les profilés métalliques (2) sont de type tubulaire et présentent en coupe un profil fermé définissant une cavité intérieure en "L" (16), et **en ce que** lesdites première, deuxième et troisième saillies de fixation (15b, 15c, 18b) présentent une forme transversale épousant la forme de la cavité intérieure en "L" (16) desdits profilés métalliques (2), lesdites première, deuxième et troisième saillies de fixation (15b, 15c, 18b) étant destinées à être insérées, en condition opérante, dans la respective cavité en "L" (16).

2. Structure selon la revendication 1, **caractérisée en ce que** les ailes définissant la forme sensiblement en "L" (6) ont lesdits tronçons terminaux rectilignes (5) de conformation à section décroissante.

3. Structure selon la revendication 2, **caractérisée en ce que** lesdites ailes de conformation à section décroissante sont reliées entre elles en correspondance avec ladite portion en retrait du contour par un segment (12) de préférence incliné de 45° par rapport aux tronçons terminaux rectilignes (5).

4. Structure selon la revendication 1, **caractérisée en ce que** lesdites ailes (6) formant ledit profil en "L" ont à leur extrémité des arêtes de conformation arrondie (13).

5. Structure selon la revendication 1, **caractérisée en ce que** lesdites ailes (6) formant ledit profil en "L" ont une largeur constante vers lesdits tronçons terminaux rectilignes (5) et sont reliées l'une à l'autre en correspondance avec ladite portion en retrait (4) du contour par un segment (12) de préférence incliné de 45° par rapport auxdits tronçons terminaux rectilignes (5).

6. Structure selon la revendication 5, **caractérisée en ce que** lesdites ailes formant ledit profil en "L" ont à leur extrémité des arêtes vives.

7. Structure selon la revendication 1, **caractérisée en ce que** ledit premier élément de jonction est destiné à la liaison entre des profilés définissant des éléments formant traverses (a, 2b) et ledit premier corps de base (15a) présente au centre un siège fileté (25) disposé verticalement en condition opérante et destiné à engager un boulon de soulèvement à oeil.

8. Structure selon la revendication 1, **caractérisée en ce que** ledit premier élément de jonction (15) est destiné à là liaison entre des profilés définissant des éléments formant traverses (2a, 2b) et ledit premier corps de base (15a) a des sièges creux (26) aptes à soutenir des portions de bord repliées de panneaux (9) susceptibles de définir des parois de l'armoire parallèles auxdits profilés (2).

9. Structure selon la revendication 1, **caractérisée en ce que** lesdits organes d'union (17) entre ledit premier élément de jonction (15) et ledit deuxième élément de jonction (18) comportent:
- des goujons faisant saillie de l'une desdites faces de butée (19, 20) et insérables dans des trous calibrés (22) de l'autre face de butée, et
- des vis de serrage aptes à relier lesdits premier (15a) et deuxième (18a) corps de base en butée l'un contre l'autre en correspondance avec lesdites faces de butée (19, 20).

10. Structure selon la revendication 9, **caractérisée en ce que** lesdits trous calibrés (22) et goujons (21) ont des profondeurs et longueurs respectives aptes à maintenir une lumière prédéterminée entre lesdites faces de butée (19, 20).

11. Structure selon la revendication 1, **caractérisée en ce que** lesdits tronçons terminaux rectilignes (5) définissent des faces terminales plates dans le profilé (2) pour l'engagement de joints d'étanchéité.
